# EUROPÄISCHE PATENTANMELDUNG

(11) **EP 0 866 361 A2**
(43) Veröffentlichungstag der Anmeldung: **23.09.1998**
(21) Anmeldenummer: 98103777.3
(22) Anmeldetag: 04.03.1998
(51) Int. Cl.: G03B 42/04

(54) **Röntgenkassette**

(30) Priorität: 19.03.1997 DE 19711584
(71) Anmelder: Agfa-Gevaert AG, 51373 Leverkusen (DE)
(72) Erfinder: Schmidt, Manfred, 86529 Schrobenhausen (DE)

(57) **Zusammenfassung**

Die Erfindung betrifft eine Röntgenkassette mit einen Rahmen (8) aus Metall sowie einer Bodenplatte (3) aus Kunststoff, die fest in den Rahmen (8) eingesetzt ist und einem Deckelteil (2), mit dem die Kassette (1) lichtdicht verschließbar ist. Weiterhin sind ein Verschlußglied (6) zum Verriegeln der Bodenplatte (3) mit dem Deckelteil (2), eine am Deckelteil (2) oder an der Bodenplatte (3) befestigte, magnetisierte Platte oder Folie (39) und eine an der Bodenplatte (3) oder am Deckelteil (2) befestigte, magnetisierbare Platte oder Folie (41) vorgesehen. Die magnetisierbare und die magnetisierte Platte und/oder Folie (39, 41) wirken derart zusammen, daß ein in die Kassette (1) eingelegtes Röntgenaufnahmemedium (40) durch die magnetische Kraft zwischen den Platten und/oder Folien flächig an eine Verstärkertolie (44) gepreßt wird.

## Beschreibung

Die Erfindung betrifft eine Röntgenkassette zur Aufnahme von strahlungsempfindlichem Material wie fotografischem Blattfilm oder stimulierbaren Phosphorfolien. Derartige Röntgenkassetten werden vorwiegend zur medizinischen Diagnostik verwendet.

Eine solche Kassette ist beispielsweise aus der DE 28 027 30 C2 bekannt. Die dort beschriebene Kassette besteht überwiegend aus Kunststoff. Derartige Kunststoffkassetten sind jedoch nur kostengünstig herstellbar, wenn sie in großen Stückzahlen produziert werden. Auch die DE 35 35 981 C2 zeigt eine derartige Kunststoff-Kassette.

In der DE 30 30 201 C2 wird eine Kunststoffkassette beschrieben, bei der die Aufnahmequalität dadurch verbessert wird, daß der Röntgenfilm zwischen magnetisierbaren Platten festgehalten und an die Verstärkerfolie gepreßt wird. Die Anziehungskraft der Platten ist in mindestens einem Bereich erhöht. Dadurch wird erreicht, daß beim Aneinanderziehen der Platten ein Anziehungskraftgefälle entsteht und störende Lufteinschlüsse über Randbereichen, die nicht so stark angezogen werden, herausgepreßt werden. Eine weitere Ausführungsform eines solchen Magnet-Andrucksystems ist in der DE 29 17 547 C2 beschrieben. Hier wird eine der Platten schwimmend in der Kassette gelagert, so daß ein Toleranzbereich entsteht und bei evtl. Temperaturschwankungen eine unterschiedliche Wärmeausdehnung der Platten abgefangen werden kann.

Obwohl Kunststoffkassetten bereits sehr weit entwickelt sind, sind sie in manchen Gebieten der Diagnostik, in denen Sonderformate benötigt werden, nicht wirtschaftlich einsetzbar, weil die zur Herstellung benötigten Spritzgußwerkzeuge - bezogen auf eine Kassette - zu teuer wären. Röntgenkassetten werden deshalb in Sonderformaten auf besonderen Kundenwunsch oder auch in bestimmten, selten benötigten großen Formaten (>35 cm x 43 cm) auf andere Weise hergestellt.

Eine solche, alternative Herstellmethode ist beispielsweise, Röntgenkassetten aus Metall herzustellen. Andererseits haben Metallkassetten die Nachteile hohen Gewichts sowie einer erhöhten Röntgenstrahlenabsorption, weswegen bei Röntgenaufnahmen mit Metallkassetten höhere Dosisleistungen nötig sind als bei Kunststoffkassetten.

In der DE 85 20 091 U1 wird ein Rahmen für eine Kassette beschrieben, der auch eine relativ einfache Herstellung der Kassetten ermöglichen soll. Der Rahmen besteht aus einzelnen Profilleisten, die an den Ecken auf Gehrung geschnitten und über ein Winkelstück miteinander verbunden sind. Es ist jedoch recht aufwendig, Längsprofilteile unterschiedlicher Länge auf Gehrung zu schneiden.

Es ist Aufgabe der Erfindung, eine Röntgenkassette anzugeben, die auch in geringen Stückzahlen in unterschiedlichen Formaten wirtschaftlich herstellbar ist und eine möglichst gute Bildqualität bei geringer Dosisleistung gewährleistet.

Diese Aufgabe wird durch eine Röntgenkassette entsprechend dem Anspruch 1 gelöst.

Erfindungsgemäß ist vorgesehen, die Röntgenkassette mit einem Rahmen auszustatten, der aus Längsprofilteilen besteht, welche über Eckprofilteile fest miteinander verbunden sind. Hierdurch läßt sich mit relativen geringem Aufwand ein Rahmen erstellen, in den eine Bodenplatte aus röntgenstrahlendurchlässigem Material (vorzugsweise aus Kunststoff bzw. kohlefaserverstärktem Kunststoff) eingesetzt ist. Hierdurch läßt sich der Absorptionskoeffizient der Bodenplatte beträchtlich reduzieren und damit sowohl die für Röntgenaufnahmen nötige Dosisleistung als auch die Bildqualität gegenüber Metallkassetten wesentlich verbessern. Die den Rahmen bildenden Elemente (Längsprofilteile, Eckprofilteile) sind vorzugsweise als Steckelemente ausgebildet, so daß Röntgenkassetten ohne weiteres nach einem Baukastenprinzip in verschiedensten Varianten (Länge, Breite) herstellbar sind. Des weiteren ist ein Deckelteil vorgesehen, das über ein am Rahmen befestigtes Scharnier mit der Bodenplatte derart verbunden ist, daß die Kassette zu öffnen bzw. lichtdicht zu verschließen ist. Bodenplatte und Deckelteil lassen sich über ein Verschlußglied verriegeln. Des weiteren ist am Deckelteil oder an der Bodenplatte eine magnetisierbare Platte oder Folie befestigt, die mit einer am anderen Element - d. h. an der Bodenplatte bzw. am Deckelteil - befestigten, magnetisierbaren Platte oder Folie zusammenwirkt. Durch die zwischen magnetisiertem Element und magnetisierbarem Element wirkende magnetische Kraft wird ein in die Röntgenkassette eingelegtes, strahlungsempfindliches Röntgenaufnahmemedium zwischen den beiden Elementen flächig an eine in der Röntgenkassette angebrachte Verstärkerfolie gepreßt. Dazu ist das magnetisierte Element und/oder das magnetisierbare Element beweglich gelagert.

In einer vorteilhaften Ausführungsform der Röntgenkassette besteht die Bodenplatte aus Kunststoff und die Längsprofilteile sowie die Eckprofilteile des Rahmens bestehen aus Metall. Dies verleiht der Bodenplatte geringe Röntgenstrahlenabsorption sowie dem aus den Längsprofilteilen sowie den Eckprofilteilen gebildeten Rahmen hohe mechanische Stabilität. Das Deckelteil der Röntgenkassette besteht vorzugsweise aus Metall, wodurch die mechanische Stabilität der Anordnung insgesamt erhöht wird. Die Eckprofilteile stehen vorzugsweise mit den Längsprofilteilen bündig im Eingriff, so daß die Kassette weitgehend kantenbzw. gratfrei ist. Zur Vereinfachung des Montageprozesses einer derartigen Röntgenkassette sind die Eckprofilteile mit den Längsprofilteilen über Montagebolzen verbunden, welche teilweise in die Eckprofilteile und teilweise in die Längsprofilteile ragen. Zur Verbesserung der Andruckeigenschaften des Magnetandruck-Systems, bestehend aus magnetisierbarem Element und magnetisiertem Element, ist die Magnetisierung des magnetisierten Elements inhomogen. Dadurch wirken über die Röntgenfläche gesehen unterschiedliche Kräfte, wodurch insbesondere Lufteinschlüsse im Andruck-System vermieden werden. Die Verschlußglieder - sofern mehrere vorgesehen sind - sind vorzugsweise mechanisch gegenläufig angeordnet, so daß bei einem Stoß gegen die Kassette maximal einer der Verschlüsse aufgehen kann, während der zweite Verschluß weiterhin versperrt bleibt.

Nachfolgend werden Ausführungsbeispiele der Erfindung anhand einiger Figuren näher erläutert.

Es zeigen:
Fig. 1 ein erstes Ausführungsbeispiel einer Röntgenkassette,
Fig. 2 ein zweites Ausführungsbeispiel einer Röntgenkassette,
Fig. 3 eine Verbindung zwischen einem Eckteil und zwei Längsprofilteilen,
Fig. 4 den Querschnitt eines Längsprofilteils einer Röntgenkassette und
Fig. 5 ein Magnetandruck-System in einer Röntgenkassette.

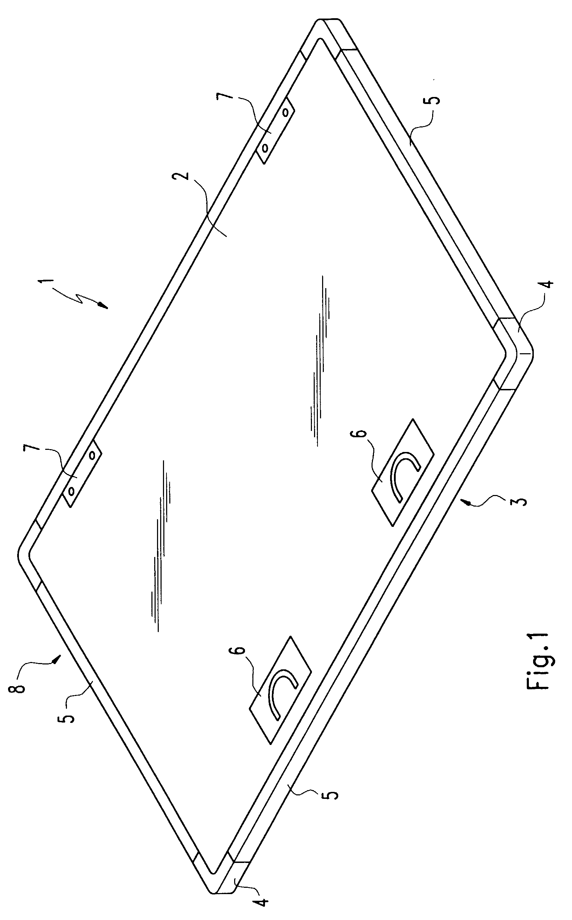

Bei der in Fig. 1 gezeigten Röntgenkassette 1 sind ein Deckelteil 2 und ein Bodenteil 3 in einen Rahmen 8 eingesetzt. Der Rahmen 8 besteht aus Längsprofilteilen 5, welche über Eckteile 4 fest miteinander verbunden sind. Das Deckelteil 2 ist über Scharniere 7 mit einem der Längsprofilteile 5 schwenkbar verbunden, so daß die Röntgenkassette geöffnet bzw. geschlossen werden kann. Verschlußglieder 6 dienen dazu, die Röntgenkassette zu verriegeln, d. h. Deckel-und Bodenteile 2 und 3 lichtdicht miteinander zu verbinden. Die Längsprofilteile 5 sind vorzugsweise aus Aluminium-Strangprofil hergestellt. Die Eckteile 4 können ebenfalls aus Aluminium oder auch aus härterem Metall bestehen. Das Deckelteil 2 besteht vorzugsweise aus einer Aluminiumplatte.

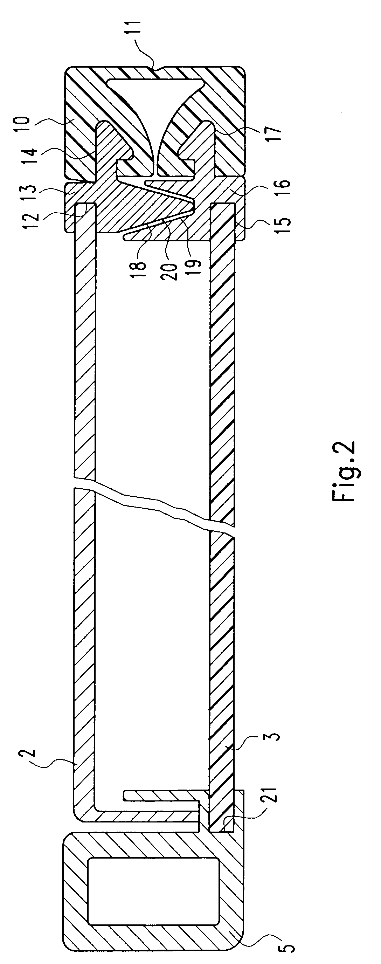

Fig. 2 zeigt eine etwas abgewandelte Ausführungsform der Röntgenkassette von Fig. 1. Bei dieser Röntgenkassette ist ein Scharnier 10 vorgesehen, welches entlang einer Biegelinie 11 um nahezu 180 ° schwenkbar ist. Dies erleichtert das Be- bzw. Entladen der Röntgenkassette mit lichtempfindlichem Aufzeichnungsmaterial wie fotografischem Röntgenfilm bzw. stimulierbaren Phosphorfolien wesentlich. Das Deckelteil 2 ist bei dieser Kassette in eine Nut 12 eines Befestigungsteils 13 eingeschoben. Das Teil 13 greift formschlüssig fest in eine entsprechende Aussparung 14 des Scharniers 10 ein. Entsprechendes gilt für das Bodenteil 3, welches in einer Nut 15 eines Boden-Befestigungsteils 16 fest eingebracht ist. Das Befestigungsteil 16 greift wiederum formschlüssig in eine Aussparung 17 des Scharniers 10 ein. Die beiden Befestigungsteile 13 und 16 weisen einander entsprechende, formschlüssige Bereiche 18 und 19 auf, durch die ein lichtdichtes Labyrinth 20 gebildet wird. Das Bodenteil 3 ist zusätzlich in einer Nut 21 fest mit dem Längsprofilteil 5 verbunden, beispielsweise mit einer Klebeverbindung oder mit einer Nietverbindung. In der EP 498 228 B1 ist ein ähnliches Scharnier beschrieben, das ohne weiteres für die vorliegende Erfindung verwendbar ist.

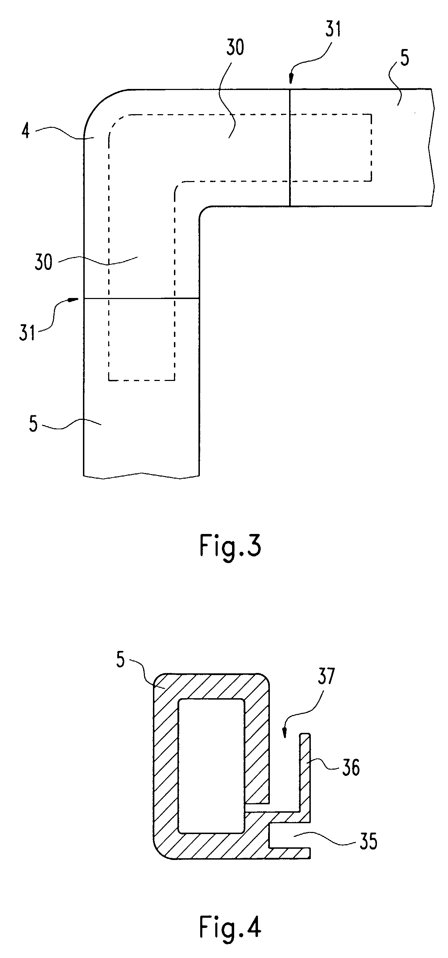

Fig. 3 zeigt die Verbindung zweier Längsprofilteile 5 mit einem Eckteil 4. Innerhalb des Eckteils 4 ist dazu ein formschlüssiger Verbindungsbolzen 30 eingebracht, welcher in die Längsprofilteile 5 gesteckt werden kann. Die Längsprofilteile 5 verlaufen mit dem Eckteil 4 an den Stoßstellen 31 jeweils bündig.

In Fig. 4 ist ein Querschnitt eines Längsprofilteils 5 gezeigt. Oberhalb der Nut 35 für das Bodenteil 3 der Kassette 1 verläuft senkrecht nach oben ein Steg 36, durch den ein Licht-Labyrinth 37 gebildet wird. In dieses Licht-Labyrinth 37 können Teile der Verschlüsse 6 eingreifen.

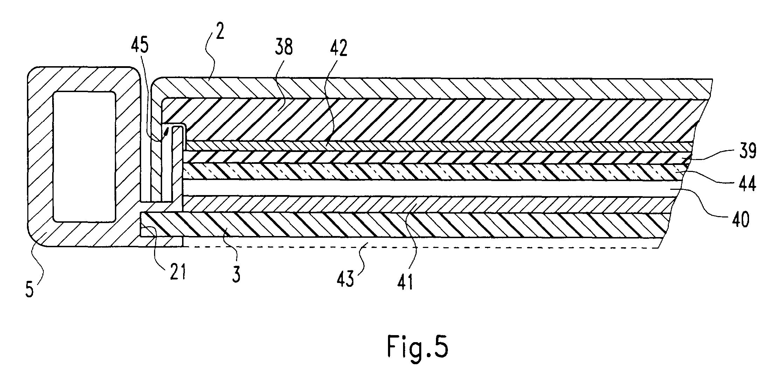

In Fig. 5 ist der mit verschiedenen Platten sowie dem Aufzeichnungsmaterial bestückte Aufbau einer erfindungsgemäßen Röntgenkassette gezeigt. Am Deckel 2 der Röntgenkassette ist ein relativ dicker Zwischenträger 38 aus Hart- oder Weichschaum angebracht. Im Bereich 45 von Verschluß- oder Scharnierelementen ist dieser Zwischenträger 38 durch thermische Verformung ausgeformt, so daß er sich den Verschluß- bzw. Scharnierelementen anpaßt. Der Zwischenträger 38 wirkt als Abstandhalter zwischen einer magnetisierten Gummiplatte 39 und dem Deckelteil 2. Statt eines dicken Zwischenträgers 38 kann auch ein etwas dünnerer Zwischenträger 38 verwendet werden, so daß zwischen diesem Zwischenträger und der Magnetgummiplatte 39 eine zusätzliche Streustrahlrasterplatte 42 eingebracht werden kann. Mit einer derartigen Streustrahlrasterplatte 42 kann dann die Röntgenstreustrahlung ausgeblendet und ein größerer Kontrast bei der Röntgenaufnahme erzielt werden.

Das Bodenteil 3 der Röntgenkassette besteht aus thermoplastischem, duroplastischem oder auch aus kohlefaserverstärktem Kunststoff. Auf der Innenseite des Bodenteils 3 ist eine Stahlfolie 41 eingeklebt. Sie wirkt mit der Magnetgummiplatte 39 zusammen. Magnetgummiplatte und Stahlfolie ziehen sich gegenseitig an, so daß der zwischen diesen beiden Platten eingebrachte Röntgenfilm 40 an eine Röntgen-Verstärkerfolie 44 angedruckt wird. Die Verstärkerfolie 44 hat die Aufgabe, Röntgenstrahlung in sichtbares Licht umzusetzen, so daß der Röntgenfilm belichtet wird. Wird der Röntgenfilm 40 durch eine stimulierbare Phosphorfolie ersetzt, so ist die Verstärkerfolie 44 nicht nötig. Auf der Kassetten-Außenseite ist die Kunststoff-Bodenplatte 3 genarbt, eingefärbt oder mit einer Kaschierfolie 43 beschichtet, so daß sie den üblichen Anforderungen für die der Röntgenfolie zugewandte Seite (tube side) von Röntgenkassetten entspricht.

Um zu vermeiden, daß in der geschlossenen Kassette Luft zwischen Aufzeichnungsträger und Bodenplatte, Deckelplatte oder Verstärkertolie eingeschlossen wird, ist es möglich, die Magnetisierungsstärke der magnetisierten Platte bereichsweise unterschiedlich hoch zu wählen. Dadurch wird erreicht, daß beim Verschließen der Kassette - ausgehend von einem Anzugsschwerpunkt - ein Anzugsgefälle entsteht, durch das Magnetplatte und Gegenplatte (Stahlfolie) nach und nach zusammenlaufen. Luft wird dabei zuverlässig aus der Kassette verdrängt. Einzelheiten zu einem solchen Andrucksystem sind beispielsweise in der DE 30 30 201 C2 beschrieben und können bei der vorliegenden Erfindung vorteilhaft übernommen werden. Des weiteren kann es vorteilhaft sein, die Magnetplatte und/oder die Gegenplatte schwimmend in der Kassette zu lagern, wie in der DE 29 17 547 C2 beschrieben. Eine solche Lagerung kann beispielsweise auf einem Kunststoffschaum oder einem elastischen Rahmen erfolgen und bewirkt, daß die Magnetplatte oder Gegenplatte auch bei größeren Temperaturschwankungen im wesentlichen glatt und gespannt bleibt.

Als Verschlußglieder können insbesondere zwei gegenläufige Verschlüsse nach der Lehre der DE 28 18 338 C1 verwendet werden. Diese bewirken, daß bei einem harten Stoß gegen die Kassette, bei dem sich eines der Scharniere öffnet und das andere schließt, die Kassette vor ungewolltem Öffnen geschützt ist.

## Patentansprüche

1. Röntgenkassette, umfassend
a) einen Rahmen (8) aus Metall,
b) eine Bodenplatte (3) aus Kunststoff, die fest in den Rahmen (8) eingesetzt ist,
c) ein Deckelteil (2), mit dem die Kassette (1) lichtdicht verschließbar ist,
d) ein Verschlußglied (6) zum Verriegeln der Bodenplatte (3) mit dem Deckelteil (2),
e) eine am Deckelteil (2) oder am Bodenteil (3) befestigte magnetisierte Platte oder Folie (39),
f) eine an der Bodenplatte (3) oder am Deckelteil (2) befestigte, magnetisierbare Platte oder Folie (41), wobei
g) die magnetisierbare und die magnetisierte Platte und/oder Folie (39, 41) derart zusammenwirken, daß ein in der Kassette (1) eingelegtes Röntgenaufnahmemedium (40) durch die magnetische Kraft zwischen den Platten und/oder Folien flächig an eine Verstärkertolie (44) gepreßt wird.

2. Röntgenkassette nach Anspruch 1, dadurch gekennzeichnet, daß der Rahmen aus Längs- (5) und Eckprofilteilen (4) besteht, die fest miteinander verbunden sind, wobei die Eckprofilteile (4) so ausgestaltet sind, daß sie die Ecken des Rahmens bilden.

3. Röntgenkassette nach Anspruch 2, dadurch gekennzeichnet, daß die Eckprofilteile (4) mit den Längsprofilteilen (5) bündig im Eingriff stehen.

4. Röntgenkassette nach Anspruch 1, dadurch gekennzeichnet, daß das Deckelteil (2) über ein am Rahmen (8) befestigtes Scharnier mit der Bodenplatte verbunden ist.

5. Röntgenkassette nach Anspruch 1, dadurch gekennzeichnet, daß die magnetisierte Platte oder Folie (39) und/oder die magnetisierbare Platte oder Folie (41) beweglich gelagert sind.

6. Röntgenkassette nach Anspruch 1, dadurch gekennzeichnet, daß die Magnetisierung der magnetisierten Platte (39) bereichsweise variiert.

7. Röntgenkassette nach Anspruch 1, dadurch gekennzeichnet, daß das Deckelteil (2) aus Metall besteht.

8. Röntgenkassette nach Anspruch 1, gekennzeichnet durch zwei gegenläufige Verschlüsse.
